# EUROPEAN PATENT SPECIFICATION

(11) **EP 2 740 614 B1**
(45) Date of publication and mention of the grant of the patent: **03.05.2017**
(21) Application number: 12819886.8
(22) Date of filing: 03.08.2012
(51) Int. Cl.: B60C 11/12, B60C 11/04, B60C 11/13, B60C 11/03

(54) **TIRE**
REIFEN
PNEU

(30) Priority: 04.08.2011 JP 2011171167
(43) Date of publication of application: 11.06.2014
(73) Proprietor: Bridgestone Corporation, Tokyo 104-8340 (JP)
(72) Inventor: KIWAKI, Yukihiro, Tokyo 187-8531 (JP)
(74) Representative: Oxley, Robin John George
(86) International application number: PCT/JP2012/069843
(87) International publication number: WO 2013/018890

(56) References cited:
- JP-A- 2006 160 055
- JP-A- 2007 314 137
- JP-A- 2008 056 111
- JP-A- 2010 188 778

## Description

### [Technical Field]

The present invention relates to a tire including a block-like land portion partitioned by a lug groove extending in a tread widthwise direction.

### [Background Art]

Conventionally, in a pneumatic tire (hereinafter, referred to as tire) mounted on a passenger vehicle, for example, it has been proposed various tread patterns aiming to achieve the coexistence of two performances that are, generally, in trade-off relation such as improving maneuverability while ensuring a wear resistance.

For example, it is known a tire having a plurality of sipings with the length of 2 to 10 mm regularly formed on a block-like land portion to improve cornering performance while ensuring a wear resistance (refer to Patent Literature 1).

According to such a tire, the rigidity of the land portion is appropriately lowered by the plurality of sipings, and thus uneven wear is prevented and a wear resistance can be ensured. Further, with the plurality of sipings and short fibers contained in rubber that forms the land portion, cornering performance on an ice or snow road, in particular, is improved.

Meanwhile, in recent years, as the global warming and the like accelerate, there is more demand for energy-saving of automobiles than ever. In such a circumstance, tires are demanded for further reducing rolling resistance.

As a method of reducing the rolling resistance of a tire, it is considered to reduce the thickness of rubber of a tread (a tread gauge). However, when the tread gauge is made thinner, the depth of a groove that is formed on the tread cannot be made as deep as before, thus causing another problem.

Specifically, there is a problem that the rigidity of a land 5 portion that is partitioned by grooves becomes too high, and a wear
resistance is reduced. Further, the shallow depth of the groove makes sufficient drainage from the ground-contact surface of the tread difficult, and reduces a hydroplaning resistance.

Attention is drawn to the disclosure of JP2006-160055.

### [Citation List]

### [Patent Literature]

[Patent Literature 1] Japanese Patent Application Publication No. 2003-136916.

### [Summary of Invention]

The present invention provides a tire comprising a block-like land portion partitioned by a lug groove, the lug groove extending in a tread widthwise direction being formed in plural number in a tire circumferential direction, wherein a plurality of hook-like sipings are formed on the block-like land portion, each of the hook-like sipings includes: a circumferential siping portion that extends along the tire circumferential direction and a hook-like siping portion that communicates to the circumferential siping portion and extends along the tread widthwise direction, and an
extended line along the hook-like siping portion intersects with an extended line along the lug groove, wherein the lug groove communicates to a circumferential narrow groove extending along the tire circumferential direction, wherein the hook-like sipings are formed in a plural number in the tread widthwise direction within the block-like land portion, wherein the hook-like siping portion extends from the circumferential siping portion toward an outer side in the tread widthwise direction.

### [DELETED]

The hook-like sipings may be formed in a plural number in the tire circumferential direction within the block-like land portion.

### [DELETED]

The depth of the lug groove may be 6 mm or less.

The block-like land portion may be provided in a tread shoulder.

### [Brief Description of Drawings]

[Fig. 1] Fig. 1 is a schematic perspective view of a pneumatic tire 10 according to an embodiment.
[Fig. 2] Fig. 2 is a schematic front view of the pneumatic tire 10 according to the embodiment.
[Fig. 3] Fig. 3 is a sectional view of the pneumatic tire 10, which is taken along a line F3-F3 shown in Fig. 2.
[Fig. 4] Fig. 4 is an enlarged view of an F4 portion shown in Fig.2. [Fig. 5] Fig. 5 is an enlarged view of an F5 portion shown in Fig. 2.
[Fig. 6] Fig. 6 is a sectional view of a low-angle groove 200, which is taken along a line F6-F6 shown in Fig. 5.
[Fig. 7] Fig. 7 is an enlarged view of an F7 portion shown in Fig. 2.

### [Description of Embodiments]

Next, a tire (a pneumatic tire) according to an embodiment will be explained with reference to drawings. It is noted that, in the following description of the drawings, the same or similar reference numerals are used to designate the same or similar portions. However, it should be appreciated that the drawings are schematically shown and the ratio and the like of each dimension are different from the real ones.

Accordingly, specific dimensions and the like should be determined in consideration of the explanation below. Moreover, among the drawings, the respective dimensional relations or ratios may differ.

### (1) Overall schematic configuration of tire

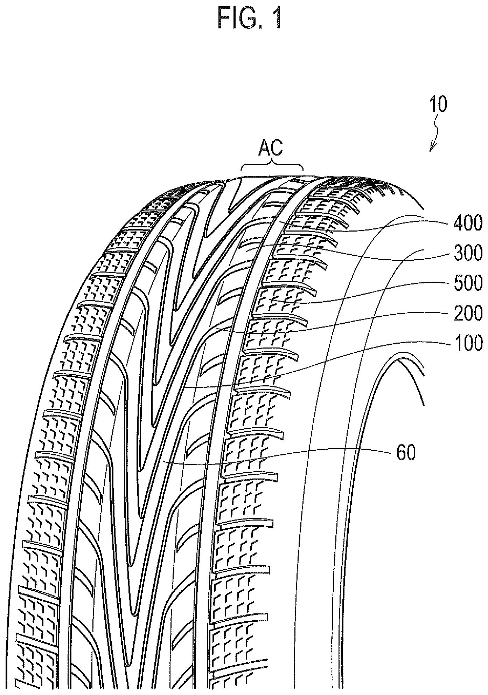

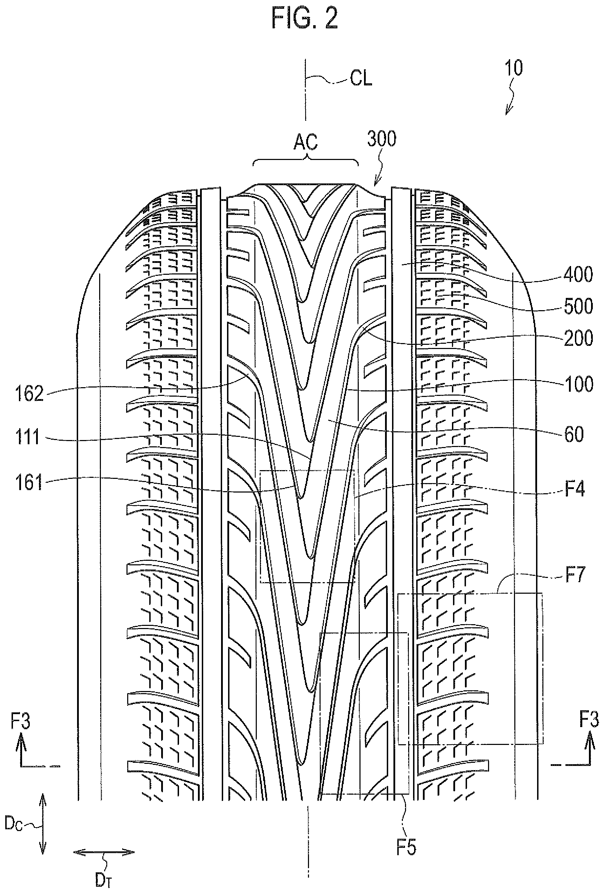

Fig. 1 is a schematic perspective view of a pneumatic tire 10 according to the present embodiment. Fig. 2 is a schematic front view of the pneumatic tire 10.

As shown in Fig. 1 and Fig. 2, on the pneumatic tire 10, a high-angle groove 100, a low-angle groove 200, and a circumferential groove 300 are formed. It is noted that the pneumatic tire 10 may be filled with, instead of air, an inert gas such as nitrogen gas.

The high-angle groove 100 is formed in a central region Ac in a tread widthwise direction D_{T}. The central region Ac is a region including a tire equator line CT passing through the center in the tread widthwise direction D_{T} of the pneumatic tire 10, and is assumed to mean a region of one-third of the tread width in a state where a normal load is applied to the pneumatic tire 10 set to have a normal internal pressure regulated by the JATMA and the like.

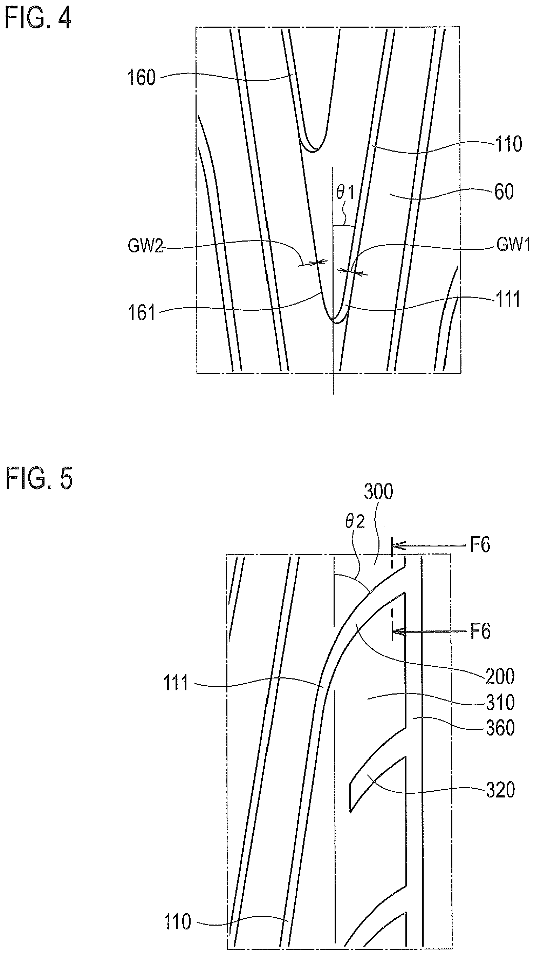

The high-angle groove 100 is formed in a plural number along a tire circumferential direction Dc. The high-angle groove 100 is configured so that the high-angle groove 100 is a groove such that an angle formed with the tread widthwise direction is 75 degrees or more in view of a tread surface. That is, the high-angle groove 100 is a groove such that an angle θ1 (see Fig. 4) formed with the tire circumferential direction DC (specifically, the tire equator line CT) is 15 degrees or less.

The low-angle groove 200 communicates to the high-angle groove 100. The low-angle groove 200 has a larger angle θ2 formed with the tire circumferential direction Dc (specifically, the tire equator line CT) than that of the high-angle groove 100. That is, the low-angle groove 200 is a groove with a smaller angle formed with the tread widthwise direction D_{T} than that of the high-angle groove 100.

The circumferential groove 300 is a linear groove extending along the tire circumferential direction D_{C}. The circumferential groove 300 is formed to overlap a part where the low-angle groove 200 is formed. That is, the low-angle groove 200 is formed to extend to the circumferential groove 300.

Further, at the outer side in the tread widthwise direction of the circumferential groove 300, a land portion 400 that is linear and extending along the tire circumferential direction Dc, is formed. The width in the tread widthwise direction D_{T} of the land portion 400 is narrower than the width in the tread widthwise direction D_{T} of the circumferential groove 300, and at the further outer side in the tread widthwise direction D_{T} of the land portion 400, a shoulder land portion 500 that is formed at the outermost side in the tread widthwise direction D_{T}, is formed.

### (2) Shape of groove

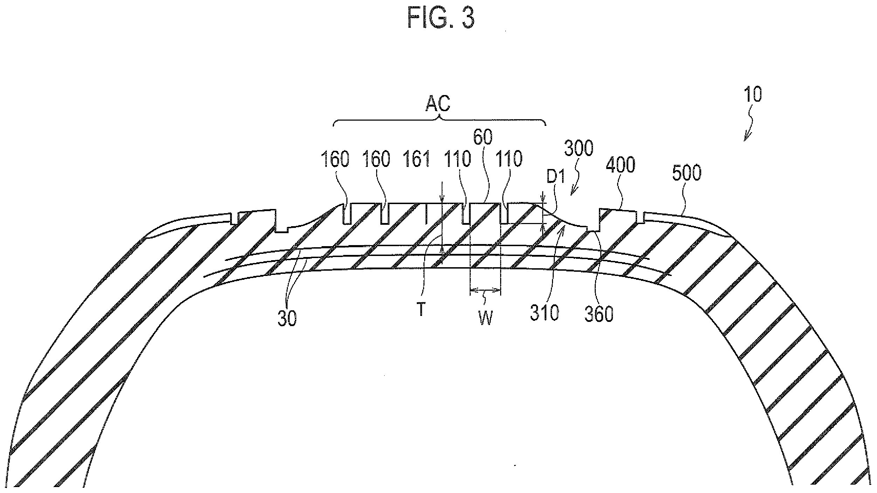

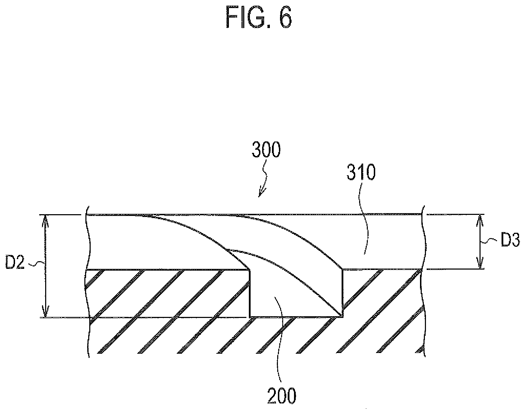

Next, shapes of the high-angle groove 100, the low-angle groove 200, and the circumferential groove 300 will be described with reference to Fig. 3 to Fig. 6. Fig. 3 is a sectional view of the pneumatic tire 10, which is taken along a line F3-F3 shown in Fig. 2. Fig. 4 is an enlarged view of an F4 portion shown in Fig. 2. Fig. 5 is an enlarged view of an F5 portion shown in Fig. 2. Fig. 6 is a sectional view of the low-angle groove 200, which is taken along a line F6-F6 shown in Fig. 5.

### (2.1) High-angle groove 100

A groove depth D₁ (see Fig. 3) of the high-angle groove 100 is 6 mm or less. Further, a thickness T (the tread gauge) of tread rubber of the pneumatic tire 10 is 10 mm and thinner than that of a general pneumatic tire. It is noted that the thickness T is a distance from the ground-contact surface of the tread to an outermost layer of a crossing belt layer 30 in the tire radial direction. Such a pneumatic tire 10 with a thin tread gauge has characteristics that rolling resistance is lower than that of a general pneumatic tire.

The high-angle groove 100 is formed in a plural number in the central region Ac in the tread widthwise direction D_{T}. The high-angle groove 100 is a groove such that an angle formed with the tread widthwise direction D_{T} is large (high angle) and runs along the tire circumferential direction D_{C}. Specifically, in the high-angle groove 100, the angle θ1 formed with the tire circumferential direction D_{C} is 15 degrees or less in view of the tread surface. However, the high-angle groove 100 preferably has a certain angle (for example, 5 degrees or more) with respect to the tire circumferential direction D_{C} (the tire equator line CT).

Further, the groove depth D1 of the high-angle groove 100 and a width W in the tread widthwise direction D_{T} of a land portion 60 that is adjacent to the high-angle groove 100 satisfies the relation of W/D1 ≤ 2.0. That is, as described above, since the thickness T of the tread rubber of the pneumatic tire 10 is 10 mm or less, the value of the groove depth D 1 is smaller than that of the general pneumatic tire. Therefore, the width W of the land portion 60 cannot have a very large value, either, and the land portion 60 has a long and narrow shape.

In the present embodiment, the high-angle groove 100 is in a V-lettered shape configured by two linear groove potions. Specifically, the high-angle groove 100 is configured by a straight groove portion 110 and a straight groove portion 160.

The straight groove portion 110 (the first straight groove) is a linear groove that is inclined toward one end side (for example, the outer side when mounted on a vehicle) in the tread widthwise direction D_{T}. The straight groove portion 160 (the second straight groove) is a linear groove that is inclined toward the other end side (for example, the inner side when mounted on a vehicle) in the tread widthwise direction D_{T}.

An end 111 at the side of the tire equator line CT of the straight groove portion 110 communicates to an end 161 at the side of the tire equator line CT of the straight groove portion 160.

A groove width GW1 on the end 111 of the straight groove portion 110 is wider than a groove width GW2 on an end 161 of the straight groove portion 160. Specifically, the groove width GW1 is 2.0 mm or more and the groove width GW2 is from 0.4 mm to a width that is the same as the groove width GW 1. It is noted that, as shown in Figs. 1 , 2 , and 4 , the high-angle groove 100 having a shape such that the groove width on an end at the side of the tire equator line CT of the straight groove portion 160 is narrower than the groove width on an end at the side of the tire equator line CT of the straight groove portion 110, is also formed. In the present embodiment, the high-angle groove 100 of which the groove width on the end at the side of the tire equator line CT of the straight groove portion 110 is narrow, and the high-angle groove 100 of which the groove width on the end at the side of the tire equator line CT of the straight groove portion 160 is narrow, are repeated alternately along the tire circumferential direction D_{C}.

### (2.2) Low-angle groove 200

The low-angle groove 200 communicates to the high-angle groove 100. Specifically, the low-angle groove 200 communicates to the end 112 (an end 162, see Fig. 2) at a tread shoulder side of the straight groove portion 110 (and the straight groove portion 160).

The low-angle groove 200 is a groove such that an angle formed with the tread widthwise direction D_{T} is small (a low angle) and runs along the tread widthwise direction D_{T}. Specifically, the low-angle groove 200 is a groove such that the angle θ2 formed with the tire circumferential direction D_{C} is 45 degrees or more in view of the tread surface. That is, the low-angle groove 200 is a groove such that the angle θ2 formed by the low-angle groove 200 with the tire circumferential direction D_{C} is larger than the angle θ1 formed by the straight groove portion 110 with the tire circumferential direction D_{C} and more gently inclined relative to the tread widthwise direction D_{T} (that is, of a low angle).

### (2.3) Circumferential groove 300

The circumferential groove 300 is formed at an outer side in the tread widthwise direction D_{T} of the low-angle groove 200. The circumferential groove 300 is formed at an outer side in the tread widthwise direction D_{T} from the central region Ac. The circumferential groove 300 is configured by an inclined groove portion 310, a notch groove portion 320, and a groove bottom portion 360.

The inclined groove portion 310 is inclined so that a groove depth D3 is deeper as going from the side of the tire equator line CT to the tread shoulder. In the present embodiment, the inclined groove portion 310 is not linear but has a gently curved shape in a cross-sectional view along the tread widthwise direction D_{T}.

The notch groove portion 320 is a notched groove that is formed on the inclined groove portion 310. An outer end in the tread widthwise direction D_{T} of the notch groove portion 320 communicates to the groove bottom portion 360. Further, an inner end in the tread widthwise direction D_{T} of the notch groove portion 320 terminates within the inclined groove portion 310. The notch groove portion 320 is formed between low-angle grooves 200 that are adjacent in the tire circumferential direction D_{C}.

The groove bottom portion 360 is formed at an outer end in the tread widthwise direction D_{T} within the circumferential groove 300. The groove depth of the groove bottom portion 360 is deeper than those of the low-angle groove 200 and the inclined groove portion 310. Specifically, a groove depth D2 of the low-angle groove is deeper than a groove depth D3 of the circumferential groove 300, specifically, the inclined groove portion 310. That is, the low-angle groove 200 is further formed within the inclined groove portion 310 of the circumferential groove 300. Further, the groove depth of the groove bottom portion 360 of the circumferential groove 300 is still deeper than that of the low-angle groove 200, and the groove depth is deeper in an order of the inclined groove portion 310, the low-angle groove 200, and the groove bottom portion 360.

### (3) Shape of shoulder land portion 500

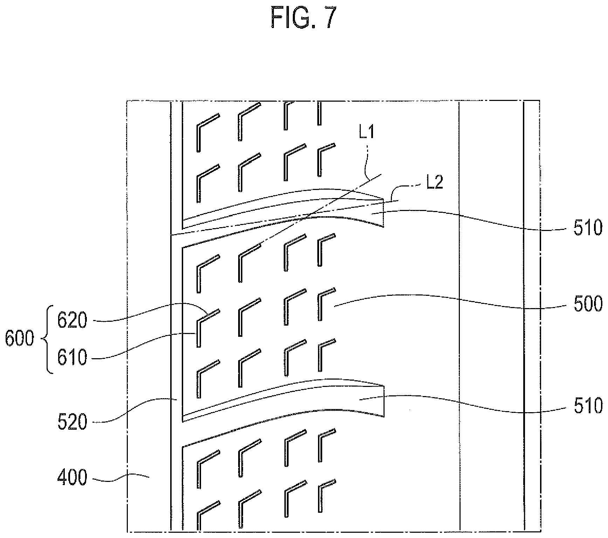

Next, the shape of the shoulder land portion 500 will be described. Fig. 7 is an enlarged view of an F7 portion shown in Fig. 2.

As shown in Fig. 7, the shoulder land portion 500 is a block-like land portion that is formed at the outermost side in the tread widthwise direction D_{T}. In the present embodiment, the shoulder land portion 500 constitutes the block-like land portion that is provided in a tread shoulder. The shoulder land portion 500 is a land portion that is partitioned by a lug groove 510 extending in the tread widthwise direction D_{T}. It is noted that, in the present embodiment, it is assumed that the tread shoulder indicates a region at an outer side in the tread widthwise direction D_{T} other than the central region Ac.

The lug groove 510 is formed in a plural number in the tire circumferential direction Dc. Thus, the lug groove 510 is formed in a plural number in the tire circumferential direction Dc, and thereby the shoulder land portion 500 is also formed in a plural number in the tire circumferential direction Dc. The depth of the lug groove 510 is 6 mm or less, similarly to the high-angle groove 100 and the like. Further, the lug groove 510 is adjacent to the land portion 400 and communicates to a circumferential narrow groove 520 extending along the tire circumferential direction Dc.

On the shoulder land portion 500, a plurality of hook-like sipings 600 are formed. Specifically, the hook-like siping 600 is formed in a plural number within the shoulder land portion 500 in the tread widthwise direction D_{T} and the tire circumferential direction Dc. More specifically, three rows of the hook-like sipings 600 are formed in the tread widthwise direction D_{T} and four rows of the hook-like sipings 600 are formed in the tire circumferential direction Dc.

The hook-like siping 600 has a circumferential siping portion 610 and a hook-like siping potion 620. The circumferential siping portion 610 is a linear shape extending along the tire circumferential direction D_{C}.

The hook-like siping potion 620 communicates to the circumferential siping portion 610 and is a linear shape extending along the tread widthwise direction D_{T}. Specifically, an end of the hook-like siping potion 620 communicates to an end of the circumferential siping portion 610. That is, the circumferential siping portion 610 and the hook-like siping potion 620 communicate to each other without intersecting with each other. The hook-like siping potion 620 extends toward the outer side in the tread widthwise direction D_{T} from the circumferential siping portion 610.

It is noted that the hook-like siping 600 is a narrow groove having a width such as being crushed to be closed (both sidewalls contact with each other) when the shoulder land portion 500 comes into contact with the road surface. The groove width of the hook-like siping 600 is preferably 0.4 mm to 1.2 mm.

Further, the hook-like siping potion 620 extends in a direction to intersect with the lug groove 510. Specifically, the hook-like siping potion 620 is formed so that an extended line L1 along the hook-like siping potion 620 intersects with an extended line L2 along the lug groove 510.

### (4) Advantageous effect

According to the pneumatic tire 10, the groove depth D1 of the high-angle groove 100 is 6 mm or less. That is, since the thickness T of the tread rubber of the pneumatic tire 10 is thinner than that of the general pneumatic tire, rolling resistance is reduced. Further, the angle θ1 formed by the high-angle groove 100 with the tire circumferential direction Dc is 15 degrees or less, and thus drainage performance of rainwater that has entered the high-angle groove 100 is good. That is, a hydroplaning resistance can be ensured.

Further, the groove depth D1 of the high-angle groove 100 and the width W in the tread widthwise direction D_{T} of the land portion 60 that is adjacent to the high-angle groove 100 satisfies the relation of WID/1 ≤ 2.0. That is, since the width of the land portion 60 narrows down in the tread widthwise direction D_{T}, the land portion 60 at breaking is prevented from being deformed to turn up in the tire circumferential direction D_{C}, and braking performance is improved. Further, the width of the land portion 60 is narrow, and thus reduces forced wear in the central region Ac (wear resulting from external force (braking force and the like) acting upon the pneumatic tire 10).

That is, according to the pneumatic tire 10, even when the thickness T of the tread rubber is reduced, a tire life and a hydroplaning resistance as good as those of the conventional tire are provided.

Further, in the present embodiment, the high-angle groove 100 forms a V-lettered shape with the straight groove portion 110 and the straight groove portion 160. Specifically, the end 111 of the straight groove portion 110 communicates to the end 161 of the straight groove portion 160. Therefore, rainwater that has entered the central region Ac can be efficiently drained. It is noted that, since the groove width GW1 of the straight groove portion 110 is narrower than the groove width GW2 of the straight groove portion 160, it is possible to prevent a great decrease in rigidity of the land portion 60 around a portion communicating between the straight groove portion 110 and the straight groove portion 160.

Further, the low-angle groove 200 communicates to the high-angle groove 100 and the circumferential groove 300 is formed in a portion where the low-angle groove 200 is formed. Further, the groove depth D2 of the low-angle groove 200 is deeper than the groove depth D3 of the circumferential groove 300. Thus, it becomes possible to preferentially guide rainwater that has entered the central region Ac to the low-angle groove 200 and the circumferential groove 300 although the groove width of the high-angle groove 100 is narrow, thus making it possible to further improve drainage performance.

Further, the circumferential groove 300 has the inclined groove portion 310 and the groove bottom portion 360 that has a groove depth deeper than that of the inclined groove portion 310 and extends in the tire circumferential direction Dc, and thus is further advantageous in terms of drainage performance of rainwater that has entered the central region Ac.

It is noted that, owing to the low-angle groove 200, an angle formed by the low-angle groove 200 with the circumferential groove 300 in view of the tread surface is large and it is avoided that a land portion block in a portion where the low-angle groove 200 communicates to the circumferential groove 300 becomes tapered, thus making it possible to prevent a decrease in rigidity or loss of the land portion block.

The tread pattern like that of the pneumatic tire 10 can be achieved because of a special setting such that the groove depth of the high-angle groove 100, the low-angle groove 200, and the circumferential groove 300 is 6 mm or less. In the case of a general groove depth (10 mm, for example), the rigidity of the land portion 60 is too weak, and thus it is difficult to use such a tread pattern in practice. It is noted that, such a tread pattern can be preferably used as a tread for retreading in which only a worn tread portion is changed.

Further, according to the pneumatic tire 10, a plurality of the hook-like sipings 600 are formed on the shoulder land portion 500. Therefore, even when the groove depth of the lug groove 510 is as shallow as 6 mm or less and compression rigidity of the shoulder land portion 500 is likely to become extremely high, the compression rigidity is prevented from becoming high. That is, even when the rubber thickness of the tread is reduced, a wear resistance similar to that of the conventional tire can be ensured.

Further, the hook-like siping potion 620 is formed so that the extended line L1 along the hook-like siping potion 620 intersects with the extended line L2 along the lug groove 510. Therefore, the rainwater that has entered between the shoulder land portion 500 and the road surface goes through the hook-like siping potion 620 from the circumferential siping portion 610 to be easily drained to the outer side in the tread widthwise direction D_{T} of the pneumatic tire 10. That is, even the pneumatic tire 10 with the shallow groove depth is enabled to drain sufficiently from the ground-contact surface of the tread, and can ensure the hydroplaning resistance.

In particular, the rainwater that has entered the central region Ac is guided to the circumferential groove 300 through the high-angle groove 100 and the low-angle groove 200 and drained by the circumferential groove 300. Further, on the outer side in the tread widthwise direction DT of the circumferential groove 300, the land portion 400 extending along the tire circumferential direction DC is provided. Therefore, the rainwater that has entered the central region Ac is drained mainly by the circumferential groove 300, and thus the lug groove 510, the circumferential narrow groove 520, and the hook-like siping 600 may mainly drain the rainwater that has entered between the shoulder land portion 500 and the road surface.

Further, since the hook-like siping 600 terminates within the shoulder land portion 500 without communicating to the lug groove 510 or the circumferential narrow groove 520, it is possible to also prevent deformation where the shoulder land portion 500 turns up from a point at the end of the hook-like siping 600.

### (5) Other embodiments

As described above, the content of the present invention is disclosed through the embodiment. However, it should not be interpreted that the statements and drawings constituting a part of the present disclosure limit the present invention. From this disclosure, a variety of alternate embodiments, examples, and applicable techniques will become apparent to one skilled in the art.

For example, the embodiment can be changed as follows: Although the low-angle groove 200 and the circumferential groove 300 are formed in the above-described embodiment, the low-angle groove 200 and the circumferential groove 300 may not necessarily be formed.

In the above-described embodiment, both the straight groove portion 110 and the straight groove portion 160 that constitute the high-angle groove 100 are linear; however, the high-angle groove 100 may not be linear, but may be in a shape of gently curving toward the outer side in the tread widthwise direction DT, for example.

Further, the high-angle groove 100 may not necessarily be in a 5 V-lettered shape such that the straight groove portion 110 communicates to the straight groove portion 160.

In the above-described embodiment, the hook-like siping 600 is formed in a plural number in the tread widthwise direction DT and in the tire circumferential direction Dc within the shoulder land portion 500, and the hook-like siping 600 is preferably formed in a plural number; however, may not necessarily be formed in a plural number in the tire circumferential direction Dc. Further, the hook-like siping 600 may be formed on the block-like land portion other than the shoulder land portion 500.

As described above, needless to say, the present invention includes various embodiments and the like not described here. Therefore, the technical range of the present invention is to be defined only by the inventive specific matter according to the adequate claims from the above description.

According to a characteristic of the present invention, it is possible to provide a tire that has a wear resistance and a hydroplaning resistance similar to those of the conventional tire even when the rubber thickness of the tread is reduced down.

## Claims

1. A tire (10) comprising a block-like land portion (500) partitioned by a lug groove (510), the lug groove (510) extending in a tread widthwise direction (D_{T}) being formed in plural number in a tire circumferential direction (D_{c}), wherein
a plurality of hook-like sipings (600) are formed on the block-like land portion (500),
each of the hook-like sipings (600) includes:
a circumferential siping portion (610) that extends along the tire circumferential direction (D_{c}) and
a hook-like siping portion (620) that communicates to the circumferential siping portion (610) and extends along the tread widthwise direction (D_{c}), and
an extended line (L1) along the hook-like siping portion (620) intersects with an extended line (L2) along the lug groove (510), **characterized in that** the lug groove (510) communicates to a circumferential narrow groove (520) extending along the tire circumferential direction (D_{c}),
wherein the hook-like sipings (600) are formed in a plural number in the tread widthwise direction (D_{T}) within the block-like land portion (500),
wherein the hook-like siping portion (620) extends from the circumferential siping portion (610) toward an outer side in the tread widthwise direction (D_{T}).

2. The tire (10) according to claim 1, wherein
the hook-like sipings (600) are formed in a plural number in the tire circumferential direction (D_{c}) within the block-like land portion (600).

3. The tire (10) according to claim 1 or 2, wherein
the depth of the lug groove (510) is 6 mm or less.

4. The tire (10) according to any one of claims 1 to 3, wherein
the block-like land portion (500) is provided in a tread shoulder.

5. The tire (10) according to any one of claims 1 to 4, wherein
the hook-like siping (600) terminates within the block-like land portion (500) without communicating to the lug groove (510) or the circumferential narrow groove (520).

## Patentansprüche

1. Reifen (10), beinhaltend einen blockartigen Stegabschnitt (500), der durch eine Stollenrille (510) geteilt wird, wobei die sich in Laufflächenbreitenrichtung (D_{T}) erstreckende Stollenrille (510) in mehrfacher Zahl in einer Reifenumfangsrichtung (D_{C}) gebildet ist, wobei
eine Vielzahl von hakenartigen Lamellierungen (600) am blockartigen Stegabschnitt (500) gebildet sind,
wobei jede der hakenartigen Lamellierungen (600) Folgendes beinhaltet:
einen Umfangsrichtungslamellierungsabschnitt (610), der sich entlang der Reifenumfangsrichtung (D_{C}) erstreckt und
einen hakenartigen Lamellierungsabschnitt (620), der mit dem Umfangsrichtungslamellierungsabschnitt (610) kommuniziert und sich entlang der Laufflächenbreitenrichtung (D_{C}) erstreckt, und
eine erweiterte Linie (L1) entlang des hakenartigen Lamellierungsabschnitts (620) eine erweiterte Linie (L2) entlang der Stollenrille (510) kreuzt,
**dadurch gekennzeichnet, dass**
die Stollenrille (510) mit einer schmalen Umfangsrille (520) kommuniziert, die sich entlang der Reifenumfangsrichtung (D_{C}) erstreckt,
wobei die hakenartigen Lamellierungen (600) in mehrfacher Zahl in der Laufflächenbreitenrichtung (D_{T}) innerhalb des blockartigen Stegabschnitts (500) gebildet sind,
wobei der hakenartige Lamellierungsabschnitt (620) sich vom Umfangsrichtungslamellierungsabschnitt (610) bis zu einer äußeren Seite in der Laufflächenbreitenrichtung (D_{T}) erstreckt.

2. Reifen nach Anspruch 1, bei dem
die hakenartigen Lamellierungen (600) in mehrfacher Zahl in der Reifenumfangsrichtung (D_{C}) innerhalb des blockartigen Stegabschnitts (600) gebildet sind.

3. Reifen (10) nach Anspruch 1 oder 2, bei welchem
die Tiefe der Stollenrille (510) 6 mm oder weniger beträgt.

4. Reifen (10) nach einem der Ansprüche 1 bis 3, bei welchem
der blockartige Stegabschnitt (500) in einer Laufflächenschulter vorhanden ist.

5. Reifen (10) nach einem der Ansprüche 1 bis 4, bei welchem
die hakenartige Lamellierung (600) innerhalb des blockartigen Stegabschnitts (500) endet, ohne mit der Stollenrille (510) oder der schmalen Umfangsrille (520) zu kommunizieren.

## Revendications

1. Bandage pneumatique (10), comprenant une partie d'appui en forme de pavé (500) divisée par une rainure à barrettes (510), la rainure à barrettes (510) s'étendant dans une direction de la largeur de la bande de roulement (D_{T}) étant formée dans une pluralité dans une direction circonférentielle du bandage pneumatique (D_{c}) ; dans lequel :
plusieurs lamelles en forme de crochet (600) sont formées sur la partie d'appui en forme de pavé (500);
chacune des lamelles en forme de crochet (600) inclut :
une partie de lamelle circonférentielle (610) s'étendant le long de la direction circonférentielle du bandage pneumatique (D_{c}) ; et
une partie de lamelle en forme de crochet (620) en communication avec la partie de lamelle circonférentielle (610) et s'étendant le long de la direction de la largeur de la bande de roulement (D_{c}) ; et
une ligne étendue (L1) le long de la partie de lamelle en forme de crochet (620) coupe une ligne étendue (L2) le long de la rainure à barrettes (510) ;
**caractérisé en ce que** :
la rainure à barrettes (510) communique avec une rainure circonférentielle étroite (520) s'étendant le long de la direction circonférentielle du bandage pneumatique (D_{c}) ;
dans lequel les lamelles en forme de crochet (600) sont formées dans une pluralité dans la direction de la largeur de la bande de roulement (D_{T}) dans la partie d'appui en forme de pavé (500) ;
dans lequel la partie de lamelle en forme de crochet (620) s'étend de la partie de lamelle circonférentielle (610) vers un côté externe dans la direction de la largeur de la bande de roulement (D_{T}).

2. Bandage pneumatique (10) selon la revendication 1, dans lequel :
les lamelles en forme de crochet (600) sont formées dans une pluralité dans la direction circonférentielle du bandage pneumatique (D_{c}) dans la partie d'appui en forme de pavé (600).

3. Bandage pneumatique (10) selon la revendication 1 ou 2, dans lequel :
la profondeur de la rainure à barrettes (510) correspond à 6 mm ou moins.

4. Bandage pneumatique (10) selon l'une quelconque des revendications 1 à 3, dans lequel :
la partie d'appui en forme de pavé (500) est agencée dans un épaulement de la bande de roulement.

5. Bandage pneumatique (10) selon l'une quelconque des revendications 1 à 4, dans lequel :
la lamelle en forme de crochet (600) se termine dans la partie d'appui en forme de pavé (500) sans être en communication avec la rainure à barrettes (610) ou la rainure circonférentielle étroite (520).
